# EUROPEAN PATENT SPECIFICATION

(11) **EP 0 404 007 B1**
(45) Date of publication and mention of the grant of the patent: **06.09.1995**
(21) Application number: 90111437.1
(22) Date of filing: 18.06.1990
(51) Int. Cl.: G08B 5/22

(54) **Method for superimposing independently transmitted data on pager display**
Verfahren zum Überlagern unabhängig gesendeter Daten auf der Sichtanzeige eines Rufempfängers
Procédé pour superposer des données transmises indépendamment sur l'affichage d'un récepteur d'appel

(30) Priority: 19.06.1989 JP 156095/89; 19.06.1989 JP 157700/89
(43) Date of publication of application: 27.12.1990
(73) Proprietor: NEC CORPORATION, Tokyo (JP)
(72) Inventor: Kuramatsu, Hiroyasu c/o NEC Corporation, Minato-ku Tokyo (JP); Sato, Toshifumi c/o NEC Corporation, Minato-ku Tokyo (JP); Matai, Masahiro c/o NEC Corporation, Minato-ku Tokyo (JP); Anma, Sadayuki c/o NEC Shizuoka Ltd., Kakekawa-shi, Shizuoka (JP)
(74) Representative: VOSSIUS & PARTNER

(56) References cited:
- EP-A- 0 317 230
- DE-A- 3 536 820
- GB-A- 2 050 767
- NTT REVIEW, vol. 1, no. 1, May 1989, pages 45-53, Tokyo, JP; M. WADA: "NTT paging system"

## Description

The present invention relates generally to a method for displaying a plurality of independently transmitted pieces of information on a pager display, and more specifically to a method for superimposing successively received messages or data on a pager display.

A radio pager which is equipped with a display has proven very popular in that a large amount of data can be transmitted at one calling as compared with an old style pager which alerts a person to call a predetermined phone number merely by means of sound and/or flashing light.

This type of known display equipped pager, however, has encountered drawbacks in that, during actual use of the display type pager, it is often the case that a person wishes to send an additional message after completing a call. In such a case, according to a prior art technique, it is necessary to prepare and transmit an entirely new call for sending the new message in which the previously sent message data also must be redundantly included. Further, it is also not seldom that, when a plurality of messages are successively transmitted, each message contains information which is at least in part duplicated in the previously transmitted ones.

It is an object of the present invention to provide a method by which previously transmitted information need not be redundantly transmitted to a portable display type pager in a subsequent call.

Another object of the present invention is to enable maps and other data to read out of a memory onboard the pager and to superimpose messages and the like thereon. These objects are solved with the features of the claims.

In brief, the above objects are achieved by an arrangement wherein data contained in second and subsequent transmissions is superimposed on the basic data first transmitted to the pager. A first mode superimposes the data in the order of receipt while a second mode stores the first received data and superimposes only most recently received thereon. A ROM is provided which contains maps and the like type of predetermined image data. Locations, times and messages can be superimposed in either of the two modes on the maps etc.

The features and advantages of the present invention will become more clearly appreciated from the following description taken in conjunction with the accompanying drawings in which like elements are denoted by like reference numerals and in which:
Fig. 1 shows a POCSAG type standard code format of the type to which instant invention is applicable;
Fig. 2 is a block diagram showing an example of a hardware arrangement (pocket pager) to which the present invention can be applied;
Fig. 3A is a schematic representation of a display RAM used in the arrangement shown in Fig. 2;
Fig. 3B is a depiction of the image which is produced by the display RAM shown in Fig. 3A;
Fig. 4 shows an example of the type of image which can be produced and which distinguishes the data which needs to be updated on a regular basis from the data which need be input only occasionally;
Fig. 5 is a second schematic example of a display RAM of the type used in the Fig. 2 circuitry;
Fig. 6 is a flow chart which shows the steps which characterize the operation of the present invention as applied to the Fig. 2 circuitry; and
Figs. 7A, 7B and 7C are drawings which illustrate the use of the superimposing which is possible with the present invention in combination with prerecorded map and the like type of image data.

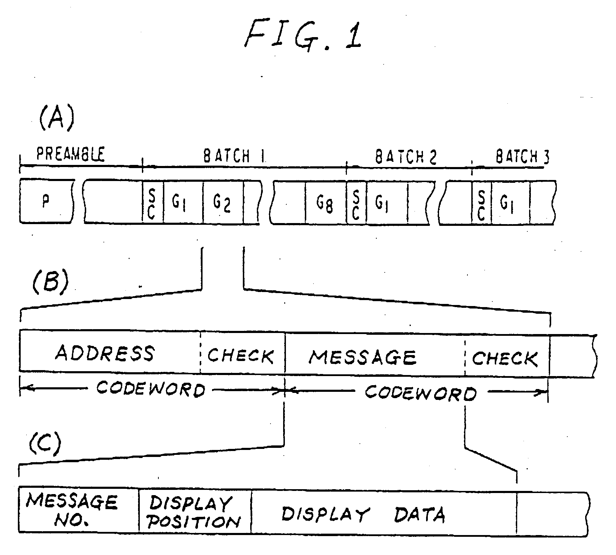

Fig. 1 is a schematic representation which shows a standard code format proposed by the POCSAG (British Post Office Code Standardization Advisory Group). Although this invention is not limited to such a code format, it is believed a brief description thereof will facilitate an understanding of this invention. According to the POCSAG specification, a transmission consists of a preamble P followed by batches 1, 2, 3, ..., each batch beginning with a synchronization codeword (SC) as shown in section A of Fig. 1.

The transmission ceases when there are no further calls. Each transmissions starts with a preamble to permit the recipient pager to attain bit synchronization and to prepare to acquire word synchronization. The preamble is a pattern of reversals, 101010..., repeated for a period of at least 576 bits, i.e., the duration of a batch plus a codeword. As shown in section (B) of this figure, codewords are transmitted in batches each of which comprises an SC followed by 8 groups or frames each containing 2 codewords. According to the specification of the POCSAG, the number of message bits is 20.

Section (C) of Fig. 1 shows in detail the message section (shown in section (B)) and that portion of a batch to which the present invention is particularly directed. This message section is divided into three parts: (a) a message number section (4 bits), (b) a display position (4 bits) and (c) a display data section (12 bits). It should be noted that the just mentioned number of bits are quoted merely by way of example, and it goes without saying that the number of bits of each section is in no way limited thereto. Further reference to section (C) will be made later in the instant disclosure.

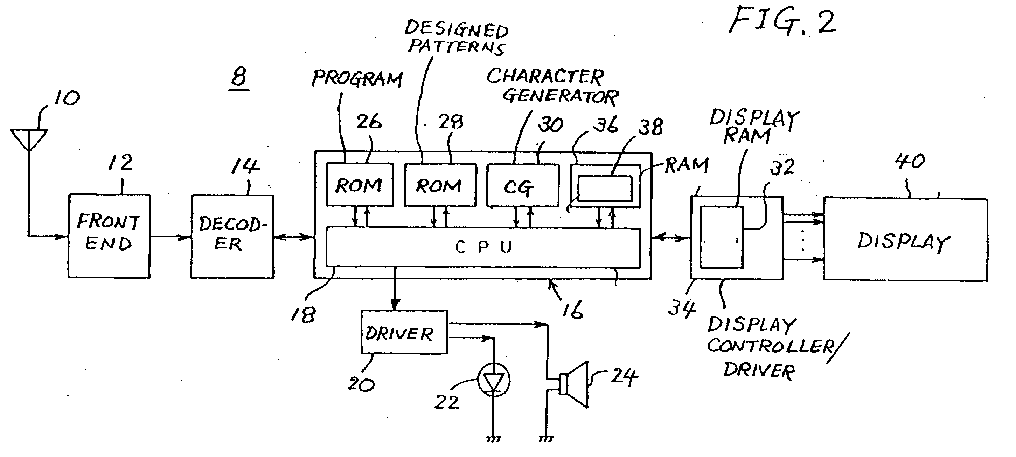

Fig. 2, shows schematically an arrangement of a pager 8 to which the present invention is applicable. A front end 12 is provided for amplifying and demodulating a code-modulated carrier wave received by an antenna 10. The front end 12 is a conventional circuit arrangement comprised of a high frequency amplifier, a frequency converter, an IF amplifier, and a discriminator. The output of the front end 12 is applied to a decoder 14 which searches for an identifying address code by comparing the same with a subscriber's unique code prestored in a PROM (Programmable Read Only Memory) within the decoder 14 (not shown in the drawings). In the event that the identifying address code coincides with the subscriber's unique code, the decoder 14 activates a control section 16 and then applies the message data included in the calling signal. When the control section 16 is activated, a CPU (Central Processing Unit) 18 enables a driver 20 which in turn operates one or both of a light source (LED for example) 22 and a speaker 24 for alerting the subscriber.

A first ROM 26 is provided for storing a program which controls the overall operations of the pager 8, while a second ROM 28 is provided for storing a plurality of pre-determined patterns which are selectively read out in response to identifying codes. A character generator 30 is operatively connected to the CPU for generating visual characters or symbols from coded data inputted from the decoder 14. The pre-determined patterns and/or characters, etc., read out from the ROM 28 and the character generators, are applied to a display RAM 32 within a display controller/driver 34. A RAM (Random Access Memory) 36 is used to define a work space 38, and includes therein a storage area for storing data or messages transmitted from a caller.

The CPU 18 controls the operations of the pager 8 using the program stored in the ROM 26. A display controller/driver 34 applies the data stored in the display RAM 32 to a display 40.

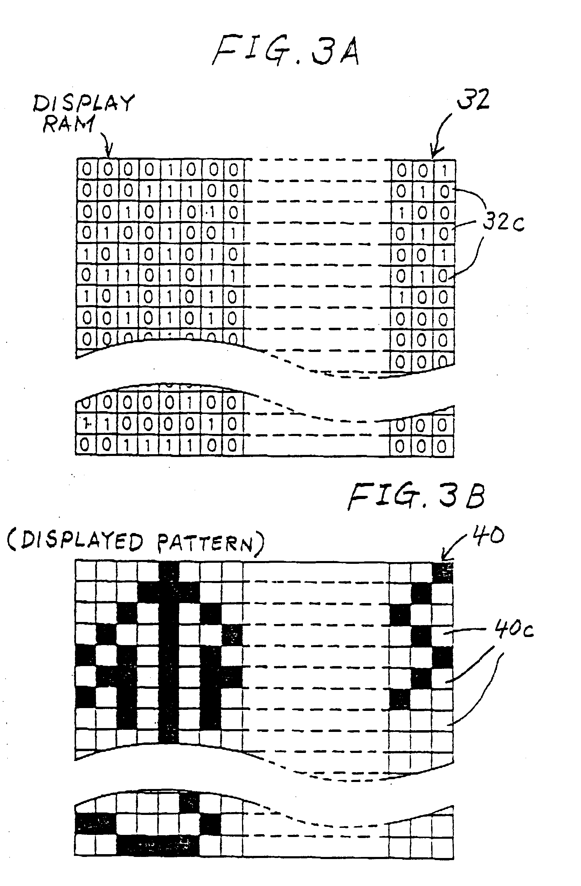

Fig. 3A schematically illustrates the RAM 32 which comprises a plurality of bit storage cells arranged in a matrix, while Fig. 3B illustrates a pattern shown on the display 40. The pattern displayed exactly corresponds to the content of the RAM 32 (Fig. 3A). That is to say, the memory cells 32c correspond to the display cells 40c in a one to one relationship.

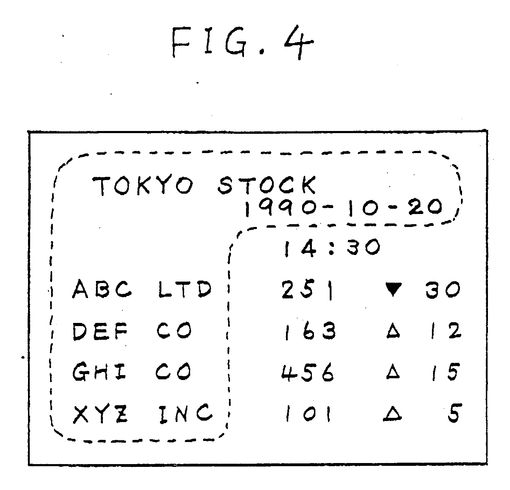

Fig. 4 shows one example of data which can be displayed. In this example stock market data displayed and respective prices etc, are periodically updated (at 30 minute intervals merely by way of example). As will be appreciated, the data enclosed within the broken line is always the same for any given day. Viz., the date and the company names will not vary. On the other hand the data outside of the broken line area will be subject to periodic change and therefore is the only data which need be transmitted on a regular basis. By reducing the data which need be transmitted to only that which will be subject to regular change, the transmission efficiency can be markedly increased.

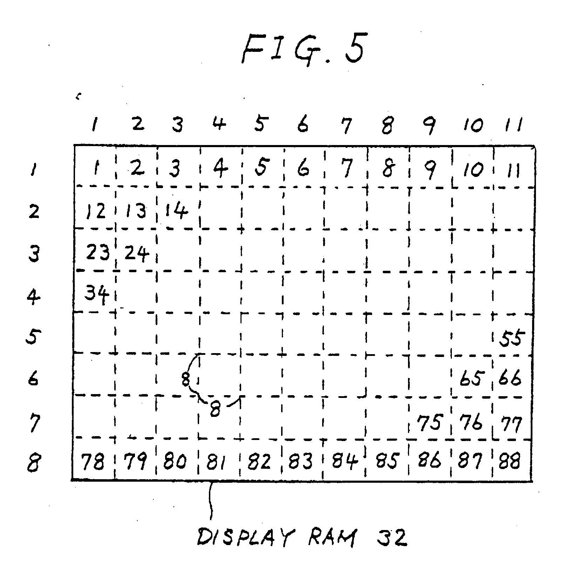

Fig. 5 illustrates the display RAM shown in Fig. 3A in terms of memory cell blocks. In this particular example each cell is composed of 8 x 8 dots while the RAM includes 11 x 8 cells. As shown in section (C) of Fig. 1 the 4 display position bits are such as to specify the cell (e.g. cell 14) from which the data to be displayed should start.

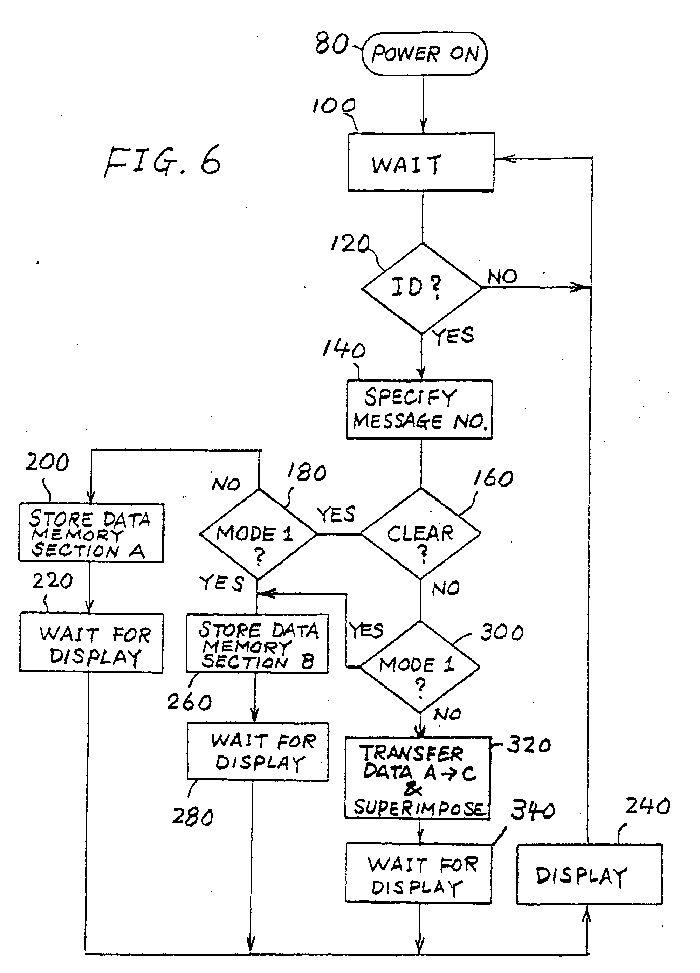

Before describing the flow chart shown in Fig. 6 it is deemed necessary to generally describe the two basic modes which characterize the present invention.

The first mode or Mode 1 as it will be referred to hereinafter, is such that all data included in successive data transmissions (e.g. messages) are superimposed on the data included in the first transmission, in the order of receipt.

The superimposing process is carried out in the work space 38 of the RAM 36 and then the superimposed image data is transferred to the display RAM 32 and thereafter displayed on display 40.

On the other hand, the second mode or Mode 2, is such the data included in the first transmission is set in memory and upon receipt of each subsequent data transmission the memorized data from the first transmission, is recalled and the data included in the most recent data transmission (only) is superimposed thereon. The resultant image retained in the work space 38 until receipt of the next data transmission.

Turning now to Fig. 6, the first step (step 80) of the routine illustrated in flow chart form, comprises the pager being switched on. Following this, at step 100 a data transmission is awaited. Upon receipt of a transmission including a subscriber's identification the routine flow to step 140 wherein a message number, which identifies one of a plurality of files stored in the RAM 36 is extracted from the received signal. At step 160 it is determined if the received data is contained in a new call (viz., a call which has not yet been received since the page was last switched on).

In the event of a new call, a clear command is issued which removes residual data from the memory sections used and the routine flow to step 180 wherein it is determined if the operational mode is to be Mode 1 or Mode 2. For example this can be indicated by a predetermined bit in the message No. data (see left hand end of section (C) of Fig. 1), assuming a "1" or "0" value. Alternatively, if a caller selected a display position which is not available (such as a position 99 in the case shown in Fig. 5), the pager determines such information as a clear command.

In the event that Mode 1 is indicated, the routine goes to step 260 wherein the data transmitted is stored in a memory section B within work space 38. Following this the routine flows to step 280 wherein the issuance of a display command is awaited. Upon issuance of this command the data stored in the memory section B is transferred to the display RAM 32 and subsequently displayed in step 240.

On the other hand, in the event that a Mode 2 requirement is detected in step 180, the routine goes to step 200. In this step, the transmitted data is stored in a memory section A of the work space 38. At step 220 the issuance of a display command is awaited.

At step 160 if the transmitted data is the second or subsequent transmission, the routine goes to step 300 wherein the required mode is determined. If Mode 1 is indicated then at step 260 the incoming data is superimposed on the already existing data which is held in memory section B. As will be appreciated this enables data to be compiled which induces the display of a image which includes all of the images or messages thus far transmitted.

On the other hand, if Mode 2 is indicated as being the required mode in step 300, the routine flows to step 320 wherein the first received data which is being held in memory section A of the work space 38, is transferred to a fresh section which shall be referred to a section C. Following this, the most recently received data is superimposed on the transferred data. As will be appreciated this produces image data which is composed of the data of the first received transmission with only the data contained in the most recently received transmission. The routine then awaits the issuance of the display signal in step 340. As an alternative, the first received data which is being held in memory section A can be transferred to memory section B in order to save memory capacity.

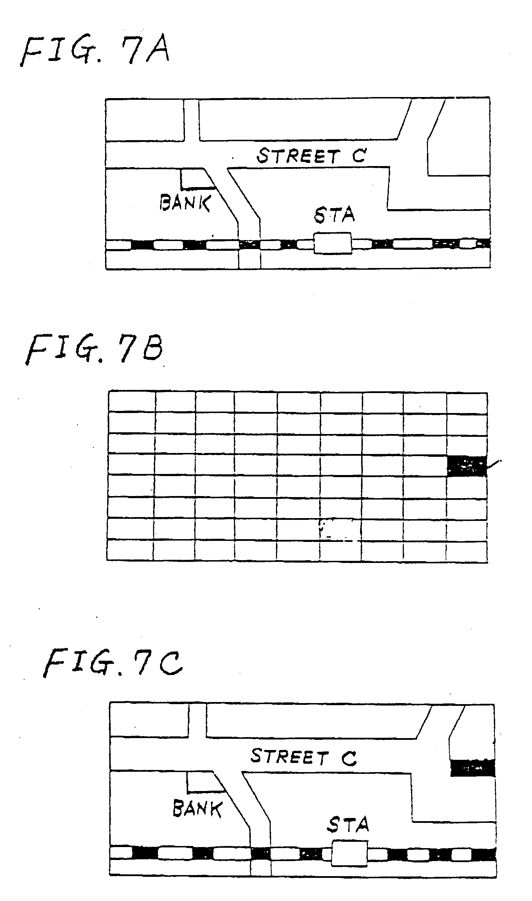

A further feature of the invention comes in the use of prestored data which can be selectively read out of ROM 28 and used in combination with the data contained in the transmission or transmissions (depending on the selected Mode). By way of example, the data stored in the ROM 28 can be a plurality of maps or predetermined images, patterns etc. The map shown in Fig. 7A for example, can be called out of ROM in response to a suitable identification code contained in the message No. portion (see section (C) of Fig. 1). In the case of Mode 1, the map data will stored in section B of the work space 38 while in the event of Mode 2 the same data would be stored in memory section A.

Fig. 7B depicts an image which results from a subsequent (second) transmission. In the case of Mode 1, the image shown in Fig. 7B will be superimposed on the image shown in Fig. 7A and thus result in the image shown in Fig. 7C.

In the case of Mode 2, it is possible if the location indicated in Fig. 7B should need to be changed due to shift in circumstances, to replace the first identified position with a new one. Conversely, with Mode 1 it is possible, for example, to develop a meeting schedule by indicating "Mr. Jones 10.00AM" and then add "Mr. Smith 1.00PM" (on a later transmission) at the same or different location as the need be.

While the foregoing description describes only two embodiments of the present invention, the various alternatives and modifications possible without departing from the scope of the present invention, which is limited only by the appended claims, will be apparent to those skilled in the art.

## Claims

1. A method of displaying information received by radio transmission, comprising:
receiving a first and sequential second to nth data transmissions;
(a) determining, based on information contained in the first transmission, which of first and second superimposing modes the data contained in the second to nth data transmissions is to be imposed on the data contained in the first transmission;
(b) superimposing the data contained in the second to nth transmissions on the data contained in the first transmission in the event that the first mode is selected;
(c) superimposing the data contained in the nth transmission on the data contained in the first transmission in the event that the second mode is selected; and
(d) producing an image on a display indicative of the superimposition.

2. A method as claimed in claim 1 wherein step (c) comprises the steps of:
memorizing the data contained in the first transmission;
recalling the memorized data; and
superimposing the data contained in the nth transmission on the recalled data.

3. A method of operating a portable pager having a display, comprising the steps of:
receiving a first and sequential second to nth radio data transmissions;
determining, based on information contained in the first transmission, which of first and second superimposing modes the data contained in the second to nth data transmissions is to be imposed on the data contained in the first transmission;
superimposing the data contained in the second to nth transmissions on the data contained in the first transmission in the event that the first mode is selected;
superimposing the data contained in the nth transmission on the data contained in the first transmission in the event that the second mode is selected; and
producing an image on the display of the pager indicative of the most recent superimposition.

4. A method as claimed in claim 3 further comprising the steps of:
storing predetermined image pattern data in a memory;
reading out selected image pattern data from the memory in response to data contained in the first transmission; and
using the data read out of memory as the data on which the data contained in the second to nth transmissions is superimposed.

5. A portable device having a display for displaying information received by radio transmission, comprising:
means for receiving a first and sequential second to nth data transmissions;
means for determining, based on information contained in the first transmission, which of first and second superimposing modes the data contained in the second to nth data transmissions is to be imposed on the data contained in the first transmission;
means for superimposing the data contained in the second to nth transmissions on the data contained in the first transmission in the event that the first mode is selected;
means for superimposing the data contained in the nth transmission on the data contained in the first transmission in the event that the second mode is selected; and
means for producing an image on the display of the portable device indicative of the superimposition.

6. A portable device as claimed in claim 5 further comprising:
means for memorizing the data contained in the first transmission;
means for recalling the memorized data; and
means for superimposing the data contained in the nth transmission on the recalled data.

7. A portable pager having a display, comprising:
means for receiving a first and sequential second to nth radio data transmissions;
means for determining, based on information contained in the first transmission, which of first and second superimposing modes the data contained in the second to nth data transmissions is to be imposed on the data contained in the first transmission;
means for superimposing the data contained in the second to nth transmissions on the data contained in the first transmission in the event that the first mode is selected;
means for superimposing the data contained in the nth transmission on the data contained in the first transmission in the event that the second mode is selected; and
means for producing an image on the display of the pager indicative of the most recent superimposition.

8. A portable pager as claimed in claim 7 further comprising:
means for storing predetermined image pattern data in a memory;
means for reading out selected image pattern data from the memory in response to data contained in the first transmission; and
means for using the data read out of memory as the data on which the data contained in the second to nth transmissions is superimposed.

9. A portable pager having a display, comprising:
receiving means for receiving a first and sequential second radio data transmissions;
determining means for determining, based on information contained in the first transmission whether or not the data contained in the second data transmission is to be superimposed on the data contained in the first transmission;
superimposing means for superimposing the data contained in the second transmissions on the data contained in the first transmission in response to the result obtained from said determining means; and
means for producing an image on the display of the pager indicative of the most recent superimposition.

## Patentansprüche

1. Verfahren zum Darstellen von durch Funkübertragung empfangenen Informationen, mit den Schritten:
Empfangen einer ersten Datenübertragung und nachfolgender zweiter bis n-ter Datenübertragungen;
(a) Bestimmen, auf der Basis der in der ersten Übertragung enthaltenen Informationen, in welchem von einem ersten oder einem zweiten Überlagerungsmodus die in der zweiten bis n-ten Übertragung enthaltenen Daten auf die in der ersten Übertragung enthaltenen Daten überlagert werden sollen;
(b) Überlagern der in der zweiten bis n-ten Übertragung enthaltenen Daten auf die in der ersten Übertragung enthaltenen Daten, wenn der erste Modus ausgewählt wird:
(c) Überlagern der in der n-ten Übertragung enthaltenen Daten auf die in der ersten Übertragung enthaltenen Daten, wenn der zweite Modus ausgewählt wird;
(d) Erzeugen eines die Überlagerung darstellenden Bildes auf einer Sichtanzeige.

2. Verfahren nach Anspruch 1, wobei der Schritt (c) die Schritte aufweist:
Speichern der in der ersten Übertragung enthaltenen Daten;
Abrufen der gespeicherten Daten; und
Überlagern der in der n-ten Übertragung enthaltenen Daten auf die abgerufenen Daten.

3. Verfahren zum Betreiben eines tragbaren Rufempfängers mit einer Sichtanzeige, mit den Schritten:
Empfangen einer ersten Funkdatenübertragung und nachfolgender zweiter bis n-ter Funkdatenübertragungen;
Bestimmen, auf der Basis der in der ersten Übertragung enthaltenen Informationen, in welchem von einem ersten und einem zweiten Überlagerungsmodus die in der zweiten bis n-ten Übertragung enthaltenen Daten auf die in der ersten Übertragung enthaltenen Daten überlagert werden sollen;
Überlagern der in der zweiten bis n-ten Übertragung enthaltenen Daten auf die in der ersten Übertragung enthaltenen Daten, wenn der erste Modus ausgewählt wird;
Überlagern der in der n-ten Übertragung enthaltenen Daten auf die in der ersten Übertragung enthaltenen Daten, wenn der zweite Modus ausgewählt wird; und
Erzeugen eines die letzte Überlagerung darstellenden Bildes auf der Sichtanzeige des Rufempfängers.

4. Verfahren nach Anspruch 3, ferner mit den Schritten:
Speichern vorgegebener Bildmusterdaten in einen Speicher;
Auslesen ausgewählter Bildmusterdaten in Antwort auf in der ersten Übertragung enthaltene Daten aus dem Speicher; und
Verwenden der aus dem Speicher ausgelesenen Daten als die Daten, auf die die in der zweiten bis n-ten Übertragung enthaltenen Daten überlagert werden.

5. Tragbare Vorrichtung mit einer Sichtanzeige zum Darstellen von durch Funkübertragung empfangenen Informationen, mit:
einer Einrichtung zum Empfangen einer ersten Datenübertragung und nachfolgender zweiter bis n-ter Datenübertragungen;
einer Einrichtung zum Bestimmen, auf der Basis der in der ersten Übertragung enthaltenen Informationen, in welchem von einem ersten oder einem zweiten Überlagerungsmodus die in der zweiten bis n-ten Übertragung enthaltenen Daten auf die in der ersten Übertragung enthaltenen Daten überlagert werden sollen;
einer Einrichtung zum Überlagern der in der zweiten bis n-ten Übertragung enthaltenen Daten auf die in der ersten Übertragung enthaltenen Daten, wenn der erste Modus ausgewählt wird;
einer Einrichtung zum Überlagern der in der n-ten Übertragung enthaltenen Daten auf die in der ersten Übertragung enthaltenen Daten, wenn der zweite Modus ausgewählt wird; und
einer Einrichtung zum Erzeugen eines die Überlagerung darstellenden Bildes auf der Sichtanzeige der tragbaren Vorrichtung.

6. Tragbare Vorrichtung nach Anspruch 5, ferner mit:
einer Einrichtung zum Speichern der in der ersten Übertragung enthaltenen Daten;
einer Einrichtung zum Abrufen der gespeicherten Daten; und
einer Einrichtung zum Überlagern der in der n-ten Übertragung enthaltenen Daten auf die abgerufenen Daten.

7. Tragbarer Rufempfänger mit einer Sichtanzeige, mit:
einer Einrichtung zum Empfangen einer ersten Funkdatenübertragung und nachfolgender zweiter bis n-ter Funkdatenübertragungen;
einer Einrichtung zum Bestimmen, auf der Basis der in der ersten Übertragung enthaltenen Informationen, in welchem von einem ersten oder einem zweiten Überlagerungsmodus die in der zweiten bis n-ten Übertragung enthaltenen Daten auf die in der ersten Übertragung enthaltenen Daten überlagert werden sollen;
einer Einrichtung zum Überlagern der in der zweiten bis n-ten Übertragung enthaltenen Daten auf die in der ersten Übertragung enthaltenen Daten, wenn der erste Modus ausgewählt wird;
einer Einrichtung zum Überlagern der in der n-ten Übertragung enthaltenen Daten auf die in der ersten Übertragung enthaltenen Daten, wenn der zweite Modus ausgewählt wird; und
einer Einrichtung zum Erzeugen eines die letzte Überlagerung darstellenden Bildes auf der Sichtanzeige des Rufempfängers.

8. Tragbarer Rufempfänger nach Anspruch 7, ferner mit:
einer Einrichtung zum Speichern vorgegebener Bildmusterdaten in einen Speicher;
einer Einrichtung zum Auslesen ausgewählter Bildmusterdaten in Antwort auf in der ersten Übertragung enthaltene Daten aus dem Speicher; und
einer Einrichtung zum Verwenden der aus dem Speicher ausgelesenen Daten als Daten, auf die die in der zweiten bis n-ten Übertragung enthaltenen Daten überlagert werden.

9. Tragbarer Rufempfänger mit einer Sichtanzeige, mit:
einer Empfangseinrichtung zum Empfangen einer ersten und einer nachfolgenden zweiten Funkdatenübertragung;
einer Bestimmungseinrichtung zum Bestimmen, basierend auf den in der ersten Übertragung enthaltenen Informationen, ob in der zweiten Datenübertragung enthaltene Daten auf die in der ersten Übertragung enthaltenen Daten überlagert werden sollen oder nicht;
einer Überlagerungseinrichtung zum Überlagern der in der zweiten Übertragung enthaltenen Daten in Antwort auf das durch die Bestimmungseinrichtung erhaltene Ergebnis auf die in der ersten Übertragung enthaltenen Daten; und
einer Einrichtung zum Erzeugen eines die letzte Überlagerung darstellenden Bildes auf der Sichtanzeige des Rufempfängers.

## Revendications

1. Procédé pour afficher des informations reçues par radiotransmission, consistant à :
recevoir une première et des deuxième à nième transmission de données séquentielles ;
(a) déterminer, selon les informations contenues dans la première transmission, lequel d'un premier et d'un second mode de superposition des données contenues dans les deuxième à n^{ième} transmissions de données doit être imposé aux données contenues dans la première transmission ;
(b) superposer les données contenues dans les deuxième à n^{ième} transmissions aux données contenues dans la première transmission dans le cas où le premier mode est sélectionné ;
(c) superposer les données contenues dans la nième transmission aux données contenues dans la première transmission dans le cas où le second mode est sélectionné ; et,
(d) produire une image sur un dispositif d'affichage indiquant la superposition.

2. Procédé selon la revendication 1 dans lequel l'étape (c) comprend les étapes qui consistent à :
mémoriser les données contenues dans la première transmission ;
rappeler les données mémorisées ; et,
superposer les données contenues dans la nième transmission aux données rappelées.

3. Procédé pour faire fonctionner un récepteur d'appel portable comportant un dispositif d'affichage, comprenant les étapes qui consistent à :
recevoir une première et des deuxième à n^{ième} radiotransmissions de données séquentielles ;
déterminer, selon les informations contenues dans la première transmission, lequel d'un premier et d'un second mode de superposition des données contenues dans les deuxième à n^{ième} transmissions de données doit être imposé aux données contenues dans la première transmission ;
superposer les données contenues dans les deuxième à n^{ième} transmissions aux données contenues dans la première transmission dans le cas où le premier mode est sélectionné ;
superposer les données contenues dans la n^{ième} transmission aux données contenues dans la première transmission dans le cas où le second mode est sélectionné ; et,
produire une image sur le dispositif d'affichage du récepteur d'appel indiquant la plus récente superposition.

4. Procédé selon la revendication 3, comprenant en outre les étapes qui consistent à :
mémoriser des données de modèle d'image prédéterminé dans une mémoire ;
lire des données de modèle d'image sélectionnées dans la mémoire en réponse aux données contenues dans la première transmission ; et,
utiliser les données lues en mémoire comme données auxquelles sont superposées les données contenues dans les deuxième à n^{ième} transmissions.

5. Dispositif portable comportant un dispositif d'affichage pour afficher des informations reçues par radiotransmission, comprenant :
des moyens pour recevoir une première et des deuxième à n^{ième} transmissions de données séquentielles ;
des moyens pour déterminer, selon les informations contenues dans la première transmission, lequel d'un premier et d'un second mode de superposition des données contenues dans les deuxième à n^{ième} transmissions de données doit être imposé aux données contenues dans la première transmission ;
des moyens pour superposer les données contenues dans les deuxième à n^{ième} transmissions aux données contenues dans la première transmission dans le cas où le premier mode est sélectionné ;
des moyens pour superposer les données contenues dans la n^{ième} transmission aux données contenues dans la première transmission dans le cas où le second mode est sélectionné ; et,
des moyens pour produire une image sur le dispositif d'affichage du dispositif portable indiquant la superposition.

6. Dispositif portable selon la revendication 5, comprenant en outre :
des moyens pour mémoriser les données contenues dans la première transmission ;
des moyens pour rappeler les données mémorisées ; et,
des moyens pour superposer les données contenues dans la n^{ième} transmission aux données rappelées.

7. Récepteur d'appel portable comportant un dispositif d'affichage, comprenant :
des moyens pour recevoir une première et des deuxième à n^{iéme} radiotransmissions de données séquentielles ;
des moyens pour déterminer, selon les informations contenues dans la première transmission, lequel d'un premier et d'un second mode de superposition des données contenues dans les deuxième à n^{ième} transmissions de données doit être imposé aux données contenues dans la première transmission ;
des moyens pour superposer les données contenues dans les deuxième à n^{ième} transmissions aux données contenues dans la première transmission dans le cas où le premier mode est sélectionné ;
des moyens pour superposer les données contenues dans la n^{ième} transmission aux données contenues dans la première transmission dans le cas où le second mode est sélectionné ; et,
des moyens pour produire une image sur le dispositif d'affichage du récepteur d'appel indiquant la plus récente superposition.

8. Récepteur d'appel portable selon la revendication 7, comprenant en outre ;
des moyens pour mémoriser des données de modèle d'image prédéterminé dans une mémoire ;
des moyens pour lire des données de modèle d'image sélectionnées dans la mémoire en réponse aux données contenues dans la première transmission ; et,
des moyens pour utiliser les données lues en mémoire comme données auxquelles sont superposées les données contenues dans les deuxième à n^{ième} transmissions.

9. Récepteur d'appel portable comportant un dispositif d'affichage, comprenant ;
des moyens de réception pour recevoir une première et des deuxième à n^{ième} radiotransmissions de données séquentielles ;
des moyens de détermination pour déterminer, selon les informations contenues dans la première transmission, si les données contenues dans la deuxième transmission de données doivent ou non être superposées aux données contenues dans la première transmission ;
des moyens de superposition pour superposer les données contenues dans la deuxième transmission aux données contenues dans la première transmission en réponse au résultat obtenu par lesdits moyens de détermination ; et,
des moyens pour produire une image sur le dispositif d'affichage du récepteur d'appel indiquant la plus récente superposition.
